# EUROPEAN PATENT APPLICATION

(11) **EP 4 375 600 A1**
(43) Date of publication of application: **29.05.2024**
(21) Application number: 22846036.6
(22) Date of filing: 03.06.2022
(51) Int. Cl.: F25D 29/00, F25D 27/00, H04L 12/28, H04L 67/52, G06Q 50/10

(54) **SMART REFRIGERATOR**

(30) Priority: 19.07.2021 KR 20210094115
(71) Applicant: LG Electronics Inc., Yeongdeungpo-gu Seoul 07336 (KR)
(72) Inventor: KIM, Chang-won, Seoul 08592 (KR); LEE, Woo-geun, Seoul 08592 (KR); LEE, Jung-jae, Seoul 08592 (KR); KIM, Ji-hoon, Seoul 08592 (KR); LEE, Dong-geun, Seoul 08592 (KR)
(74) Representative: Vossius & Partner Patentanwälte Rechtsanwälte mbB
(86) International application number: PCT/KR2022/007943
(87) International publication number: WO 2023/003164

(57) **Abstract**

The present invention relates to a smart refrigerator having a function of providing information, which a user needs, through an app by using control data inside the refrigerator. The smart refrigerator according to the present invention has: a night function of allowing a user to set a mode required at night; an app display function of showing state information of the refrigerator on a display window of the refrigerator or on a mobile app (application) of a user through wired/wireless communication; an inducing function of, through real-time monitoring of a state of the refrigerator, inducing a user to take a specific action when the state of the refrigerator is out of a normal state; and the like. According to the present invention as described above, a user can identify a state of a refrigerator from a distance, and can take action when abnormalities occur in the state of the refrigerator, storage of food, or the like.

## Description

### Technical Field

The present disclosure relates to a smart refrigerator and, more particularly, to a smart refrigerator that has a function of providing information needed by a user through an app by using control data inside the refrigerator.

### Background Art

In general, a refrigerator is a home appliance that allows food to be stored at low temperatures in an internal storage space shielded by a door.

For this purpose, a refrigerator is configured to keep stored food in an optimal condition by cooling the inside of the storage space by using cold air generated through heat exchange with a refrigerant circulating in a refrigeration cycle.

In addition, an ice-making function that makes and provides ice and various functions for controlling the ice-making function are being added to such a refrigerator as disclosed in Korean Patent Nos. 10-0358581 and 10-1636230.

However, in such a prior art, ice making and ice separation are often performed, and ice separation time is set but when the length of day and night changes due to the season, this seasonal change cannot be considered in the ice separation time, and an ice separation prevention time zone is set uniformly. Therefore, there are problems such as disruption of a user's sleep or the operation of ice separation even at night.

In addition, in a conventional refrigerator, lights inside the refrigerator are set to have the same illuminance even at night when the surroundings are dark, causing glare, and the refrigerator only has a function to display the temperature status of the refrigerator externally, so when a temperature is outside a set range, a user is confused since the user cannot know what action to take.

In addition, it is difficult to know exactly when to replace pasteurization/sterilization or water purification filters, it is difficult to check energy wastage due to the number of opening times of a refrigerator door, and water or ice becomes contaminated due to long-term storage.

### Disclosure

### Technical Problem

Accordingly, the present disclosure has been made to solve the problems occurring in the prior art as described above and is intended to propose a smart refrigerator that prevents glare at night by allowing a user to appropriately adjust the brightness of an internal light of the refrigerator at night.

In addition, the present disclosure is intended to propose a smart refrigerator that displays an internal temperature state of the refrigerator, a filter usage state, and an energy usage state in real time on a display window of the refrigerator or on a mobile app (application) of a user through wired/wireless communication.

Additionally, the present disclosure is intended to propose a smart refrigerator that has a function that induces a user to take a specific action when the state of the refrigerator is outside a normal state through real-time monitoring of the state of the refrigerator.

### Technical Solution

In order to accomplish the above objectives, according to characteristics of the present disclosure, a smart refrigerator of the present disclosure may be provided with a night function that allows a user to set a mode required at night. Accordingly, glare and disruption of nighttime sleep are prevented.

In addition, the refrigerator of the present disclosure may include an app display function that displays state information of the refrigerator on a display window of the refrigerator or on a mobile app (application) of a user through wired/wireless communication. Accordingly, a user may check and adjust the state of the refrigerator even at a position away from the refrigerator.

In addition, the smart refrigerator of the present disclosure may have an inducing function that induces a user to take a specific action when the state of the refrigerator is outside a normal state through the real-time monitoring of the state of the refrigerator. That is, a user may be induced to take a specific action through a push notification.

The smart refrigerator of the present disclosure may include the night function that allows a user to set a mode required at night, the app display function that display the state information of the refrigerator on the display window of the refrigerator or on a mobile app (application) of a user through wired/wireless communication, and the inducing function that induces a user to take a specific action when the state of the refrigerator is outside a normal state through the real-time monitoring of the state of the refrigerator.

The night function may include a night anti-glare mode of preventing a user's glare by allowing the user to adjust internal brightness of the refrigerator to be darker at set night time than during the day, and a night silent mode of preventing an ice separation function of an ice maker from operating at set silent time.

The set night time in the night anti-glare mode may be time from sunset to sunrise.

The time from sunset to sunrise may be calculated from sunset time and sunrise time for each day preset in a mobile or mobile app of a user.

The time from sunset to sunrise may be supplied from a sunset time and sunrise time provider through a mobile or mobile app of a user.

In addition, data about the sunset and sunrise time supplied from the provider may be based on an installation location of the refrigerator preset in the app of the user.

When setting the internal brightness of the refrigerator in the night anti-glare mode, a user may perform a preview function to experience a state of the brightness in advance.

Internal brightness of the refrigerator in the night anti-glare mode may be set to be at least one brightness among 10%, 30%, 50%, and 70% of normal brightness during the day.

The set night time in the night silent mode may be set by a user.

The set silent time in the night silent mode may be set not to exceed a total of 9 hours.

The app display function may include: a temperature display configured to display a temperature state inside the refrigerator; a filter display configured to display a remaining amount or remaining period of time of a filter used in the refrigerator; and an energy display configured to display an energy consumption state including an amount of electricity used in the refrigerator.

The app display function may further include: an ice condition display configured to display a state of an ice maker; and a storage state display configured to display a state of food in the refrigerator.

The temperature display may display a state of a current temperature compared to a target temperature in the refrigerator.

In the temperature display, three or more of 'very high', 'high', 'adequate', and 'low' may be used.

In addition, the temperature display of a refrigerating compartment may be divided into four levels of 'very high', 'high', 'adequate', and 'low', and the temperature display of a freezer compartment may be divided into three levels of 'very high', 'high', and 'adequate'.

The temperature display may display 'temperature stabilizing' when a target temperature has not been reached for up to 72 hours after power is turned on.

The filter display may include displaying the remaining amount of a sterilization filter and displaying the remaining amount of a water purification filter.

Displaying of the remaining amount of the sterilization filter may be set to display a period of remaining usable time of the sterilization filter in a percentage (%).

The displaying of the remaining amount of the water purification filter may be set to display a lower value, in a percentage (%), of a period of remaining usable time of the water purification filter and a remaining water discharge amount.

The energy display may include displaying power usage, door opening formation, or water/ice usage.

The door opening information may display the number of door openings or a period of door opening time by day, week, month, or year.

The water/ice usage display may display water usage or ice usage by day, week, month, or year.

The ice condition display may display at least one of 'off', 'creating ice', 'full of ice', and 'running a night silent mode'.

The storage state display may be divided into levels of 'attention', 'caution', 'warning', and 'danger'.

The storage state display may include displaying whether 'smart fresh storage operation is in progress' and 'fresh storage operation finished' or a schedule of 'fresh storage operation scheduled' by date.

The temperature display may display a temperature state before defrosting until a target temperature range is reached or four hours have elapsed after the defrosting when a defrost mode is performed.

The inducing function may guide filter replacement through a push notification when a filter reaches a replacement cycle thereof or remaining usable time/remaining amount of the filter reaches a predetermined level.

The inducing function may guide door opening checking or food location changing through a push notification when a temperature inside the refrigerator is outside a normal range.

The inducing function may provide a push notification when water or ice is not used for a predetermined period or more.

The push notification may be provided when water or ice is not used for 7 days.

### Advantageous Effects

The smart refrigerator of the present disclosure has the following effects.

First, the smart refrigerator of the present disclosure has a function of providing information, which a user needs, through an app by using control data inside the refrigerator. Accordingly, the smart refrigerator has an advantage in that a user can check a state of the refrigerator and an internal storage state in real time and take action even at a position spaced apart from the refrigerator.

Second, in the smart refrigerator of the present disclosure, brightness inside the refrigerator may be adjusted to be darker at night than during the day. Accordingly, glare can be prevented when a user opens a refrigerator door at night. In addition, in the present disclosure, the night anti-glare mode can be set from sunset time to sunrise time, so time at which an anti-glare function is activated is automatically adjusted regardless of regions or seasons.

Third, in the smart refrigerator of the present disclosure, a temperature inside the refrigerator is displayed for each storage compartment, and is displayed in a text such as 'high', 'adequate', and 'low' and a color. Accordingly, there is the advantage of improving convenience of use as a user can easily visually recognize the temperature inside the refrigerator.

Fourth, in the smart refrigerator of the present disclosure, the remaining amount of the sterilization filter and the remaining amount of the water purification filter are displayed on an app. In addition, when a filter reaches its replacement cycle or a period of remaining usable time/remaining amount of a filter reaches a predetermined level, filter replacement is notified through a push notification. Accordingly, a user can prepare a filter and replace with the filter when a filter replacement cycle approaches or when a push notification is sent. Additionally, the usage check of the water purification filter is determined by considering water usage as well as usage time, so the notification is provided by calculating a more accurate filter replacement cycle.

Fifth, in the smart refrigerator of the present disclosure, power usage, door opening information, or water/ice usage can be displayed in real time, and usage by period is displayed in a graph. Accordingly, a user can check energy usage.

Sixth, in the smart refrigerator of the present disclosure, when a temperature inside the refrigerator is outside a normal range, a push notification is provided to check door opening or change the location of food. Accordingly, when the temperature of the refrigerator is abnormal, a user can check whether a refrigerator door is open or closed, or change the location of food to ensure that cold air is evenly distributed inside the refrigerator.

Seventh, in the smart refrigerator of the present disclosure, a push notification is provided when water or ice is not used for a predetermined period or more. That is, when water or ice has not been used for 7 days, a push notification is provided to allow a user to remove the water or ice, thereby preventing bacterial growth.

### Description of Drawings

FIG. 1 is a configuration view illustrating the configuration of the state notification system of a smart refrigerator according to one exemplary embodiment of the present disclosure.
FIG. 2 is a perspective view illustrating the configuration of the smart refrigerator according to the exemplary embodiment of the present disclosure.
FIG. 3 is a block diagram illustrating an exemplary embodiment of the control system of the smart refrigerator of the present disclosure.
FIG. 4 is a block diagram illustrating functions performed in the smart refrigerator according to the exemplary embodiment of the present disclosure.
FIG. 5 is a configuration diagram of a home screen to explain the functions of the smart refrigerator according to the present disclosure.
FIG. 6 is a configuration diagram of a screen illustrating an embodiment of setting a night anti-glare function of the smart refrigerator according to the present disclosure.
FIG. 7 is a flowchart illustrating an example of the time setting process of the night anti-glare function of the smart refrigerator according to the present disclosure.
FIG. 8 is a flowchart illustrating an example of the sunrise and sunset time setting process of the night anti-glare function of the smart refrigerator according to the present disclosure.
FIG. 9 is a configuration diagram of a screen illustrating an embodiment of setting a night silent function of the smart refrigerator according to the present disclosure.
FIG. 10 is a flowchart illustrating the process of performing the night silent function of the smart refrigerator according to the present disclosure.
FIG. 11 is a configuration diagram of a screen illustrating the execution state of temperature information of the smart refrigerator according to the present disclosure.
FIG. 12 is a configuration diagram of a screen illustrating an example of use of a filter management menu of the smart refrigerator according to the present disclosure.
FIG. 13 is a configuration diagram of a screen illustrating an example of the energy monitoring of the smart refrigerator according to the present disclosure.
FIG. 14 is a configuration diagram of a screen illustrating an example of a menu configuration of an ice maker of the smart refrigerator according to the present disclosure.
FIG. 15 is a configuration diagram of a screen illustrating the execution state of a night silent mode in the menu configuration of the ice maker of the smart refrigerator according to the present disclosure.
FIG. 16 is a configuration diagram of a screen illustrating an example of a state display of a smart care of the smart refrigerator according to the present disclosure.

### Mode for Invention

Hereinafter, a smart refrigerator of the present disclosure will be described in detail with reference to the accompanying drawings.

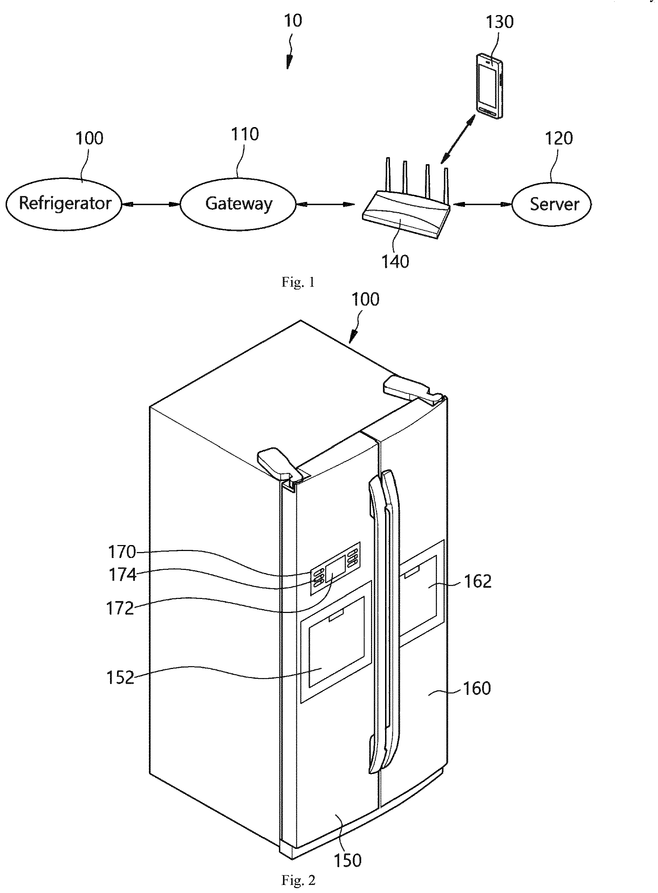

FIG. 1 is a configuration view illustrating the configuration of the state notification system of the smart refrigerator according to one exemplary embodiment of the present disclosure. Referring to FIG. 1, the state notification system 10 of a refrigerator status may include a refrigerator 100, a gateway 110, a server 120, a terminal 130, and an access point 140, etc.

Multiple stuffs may be stored in the refrigerator 100, and the stuffs refer to food and drinks, etc. stored in the refrigerator 100. In addition, hereinafter, 'inside a refrigerator' is sometimes referred to as 'a refrigerator inside'. That is, 'a refrigerator inside' used in the present disclosure is preferably understood to mean `inside of a refrigerator'.

The refrigerator 100 may include an event for opening or closing at least one of a freezer compartment door, a freezer compartment pull-out door, a refrigerating compartment door, and a refrigerating compartment pull-out door. In addition, the event may include various types of events, such as an event for receiving a remaining amount measurement request signal or an event for inducing a user's action.

The refrigerator 100 may transmit state information of food stored in the refrigerator or an energy usage state such as a temperature, the state of a filter, the number of opening times of door, and water usage to the gateway 110 or the server 120. Such state information may be displayed on the front surface of the refrigerator 100, and may be transmitted to a mobile phone of a user or a specific registered person.

Accordingly, the gateway 110 may receive, from the refrigerator 100, at least one of the state information of food stored in the refrigerator or the energy usage state such as a temperature, the state of a filter, the number of opening times of door, and water usage. In addition, the gateway 100 may transmit information such as a received image, weight, quantity, or remaining amount to the server 120.

In one embodiment, the gateway 110 may transmit data to the refrigerator 100 and receive data therefrom by using communication methods such as Bluetooth, ZigBee, and power line communication (PLC).

The access point 140 may serve to relay data transmission and reception between the refrigerator 100, the gateway 110, the server 120, and the terminal 130. The access point 140 may support Bluetooth, Zigbee, power line communication (PLC), an IEEE802.11 communication method, IEEE802.11n communication method, an IEEE802.11g communication method, an IEEE802.15.4 communication method, a WiFi communication method, and an Ethernet communication method. The access point may support data transmission and reception between different types of communication methods.

The server 120 may receive and store, from the refrigerator 100 or the gateway 110, at least one of the state information of food stored in the refrigerator and an energy usage state such as a temperature, the state of a filter, the number of the opening times of a door, and water usage. In addition, when receiving a signal requesting a temperature and the state of a filter, or an energy usage state such as the number of opening times of a door and water usage from the terminal 130, the server 120 may transmit information or data corresponding to the request signal from the terminal 130 to the terminal 130.

In addition, when receiving a signal for requesting information about specific data from the terminal 130, the server 120 may transmit the request signal to the refrigerator 100 in response to the request signal reception. Additionally, the request signal from the terminal 130 may be directly transmitted to the refrigerator 100, or may be transmitted through the gateway 110 to the refrigerator 100.

The terminal 130 may download and install a refrigerator application and execute this application. A user may manipulate the terminal 130 to transmit a refrigerator state information request signal to the server 120 or the refrigerator 110 through the executed refrigerator application.

The terminal 130 may include various types of mobile terminals, such as mobile phones, smart phones, laptop computers, digital broadcasting terminals, personal digital assistants (PDAs), portable multimedia players (PMPs), and navigation devices.

In addition, the terminal 130, which is an intelligent display device that adds a computer support function to a broadcast reception function, may be faithful to the broadcast reception function and have additional internet functions, and may be provided with an easy-to-use interface such as a manual input device, touch screen, touch pad, or magic remote control. The terminal 130 may be a network TV, HBBTV, smart TV, and open hybrid TV (OHTV), and in some cases, may be applied even to PCs and home appliances.

Here, user actions are recognized by selection of a physical button of a display device or remote controller, performance of a predetermined gesture or selection of a soft button on a touch screen display surface, performance of a predetermined gesture recognized from an image captured by an imaging device, and performance of predetermined vocalization recognized by voice recognition. The gestures may include touch gestures and spatial gestures.

FIG. 2 illustrates a perspective view of the smart refrigerator according to the exemplary embodiment of the present disclosure.

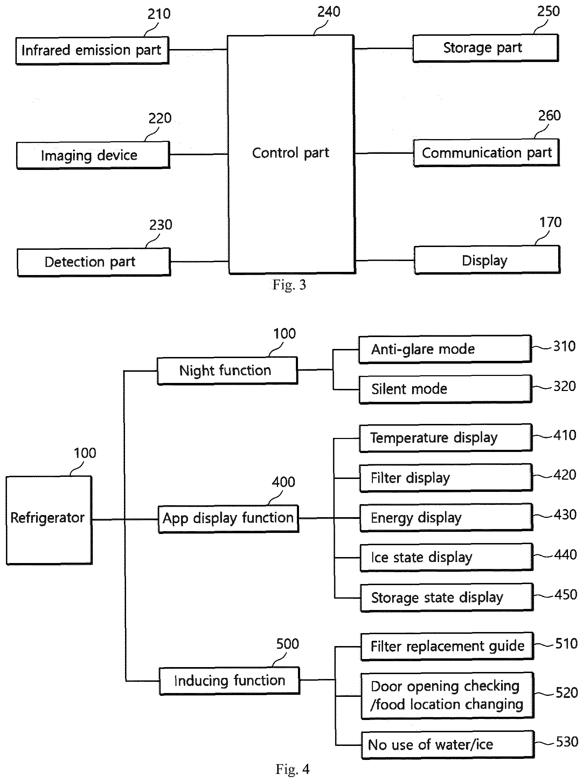

As illustrated in the drawing, the freezer compartment door 150 configured to open and close a freezer compartment inside a refrigerator body, and the refrigerating compartment door 160 configured to open and close the refrigerating compartment may be disposed on the front surface of the refrigerator 100. Of course, in FIG. 3 of the embodiment of the present disclosure, the freezer compartment and the refrigerating compartment are arranged on the left and right, respectively, but the arrangement is not limited to the embodiment of the present disclosure. The freezer compartment may be arranged in various configurations, such as being arranged up, down, left, and right with respect to the refrigerating compartment. The refrigerator may include one storage compartment.

The freezer compartment door 150 may have a display 170 arranged thereon. Additionally, in the present disclosure, although the display 170 is disposed on the freezer compartment door 150, the display 170 may be disposed on the refrigerating compartment door 160, or may be disposed on at least one of the left surface, right surface, and rear surface of the refrigerator 100. That is, the display may be variously disposed.

The display 170 may include a display panel 172 and manipulation buttons 174. The display panel 172 may be a touchscreen. The display panel 172 may display the state of the refrigerator, various signals, or notifications.

The manipulation buttons 174 may include buttons for receiving control commands of the refrigerator 100 from a user. A user may take an action requesting the internal state of the refrigerator by pressing one of the manipulation buttons 1740.

The freezer compartment door 150 and the refrigerating compartment door 160 may include the freezer compartment pull-out door 152 and the refrigerating compartment pull-out door 162, respectively. The pull-out doors 152 and 162 are intended to open and close a home bar.

FIG. 3 is a block diagram illustrating the configuration of the control system of the smart refrigerator according to the exemplary embodiment of the present disclosure.

As illustrated in the drawings, the refrigerator 100 may include an infrared emission part 210, an imaging device 220, a detection part 230, a control part 240, a storage part 250, a communication part 260, and the display 170.

The infrared emission part 210 may emit infrared rays to a dedicated storage space, and the imaging device 220 may be installed to image the dedicated storage space.

The detection part 230 may include various sensors installed inside and outside the refrigerator, and may detect various internal states of the refrigerator such as an internal temperature of the refrigerator, filter usage, water or ice usage, and door opening/closing.

The control part 240 may detect various events or signals from the above-described parts and send control commands. Here, the events may include an event for opening or closing at least one of the freezer compartment door, the freezer compartment pull-out door, the refrigerating compartment door, and the refrigerating compartment pull-out door, or an event for receiving a refrigerator state measurement request signal.

In response to the event detection, the control part 240 may detect and control the internal environment of the refrigerator or the state of food, and may control the dedicated storage space to be illuminated with infrared rays or control the imaging device 220 to image the infrared-illuminated dedicated storage space.

The communication part 260 may transmit data or images of the various internal states of the refrigerator detected by the detection part 230, and values (data) calculated by the control part 240 wiredly or wirelessly.

The storage part 250 may store data of the internal states of the refrigerator detected by the detection part 230 or values calculated by the control part 240.

The display 170 may display at least one of the internal states of the refrigerator, that is, the internal temperature state of the refrigerator, the state of a filter, values measured by various sensors, images photographed by the imaging device 250, and values (data) calculated by the control part 240 to be recognized from the outside.

In addition, when detecting a user's request signal, the control part 240 may respond to this request signal and may control data detected by various sensors, images captured by the imaging device 250, or values calculated by the control part 240 to be displayed to the outside.

FIG. 4 illustrates a block diagram illustrating functions performed in the smart refrigerator according to the exemplary embodiment of the present disclosure.

As illustrated in the drawing, the function of the smart refrigerator according to the present disclosure may include a night function 300 of allowing a user to set a mode required at night, an app display function 400 of displaying the state information of the refrigerator 100 on the display window of the refrigerator 100 or on mobile app (application) of a user through wired/wireless communication, and an inducing function 500 of inducing a user to take a specific action when the state of the refrigerator is outside a normal state through the real-time monitoring of the state of the refrigerator 100.

The night function 300 may include a night anti-glare mode 310 of preventing a user's glare by allowing the user to adjust the internal brightness of the refrigerator to be darker during set night time than during the day, and a night silent mode 320 of preventing the ice-separation function of the ice maker from operating during set silent time.

The app display function 400 may include a temperature display 410 configured to display a temperature state inside the refrigerator, a filter display 420 configured to display a remaining amount or remaining period of time of a filter used in the refrigerator, and an energy display 430 configured to display an energy consumption state including an amount of electricity used in the refrigerator 100. In addition, the app display function 400 may further include an ice condition display 440 configured to display the state of an ice maker, and a storage state display 450 configured to display the state of food in the refrigerator.

The inducing function 500 may include a function 510 that guides filter replacement through a push notification when the filter reaches its replacement cycle or a remaining period of filter use time/remaining amount reaches a predetermined level. In addition, the inducing function 500 may further include a function 520 that guides checking if a door is opened or the changing of location of food through a push notification when a temperature inside the refrigerator is outside a normal range. In addition, the inducing function 500 may include a function 530 that provides a push notification about the non-use of water or ice when there is no use of water or ice for a predetermined period or more.

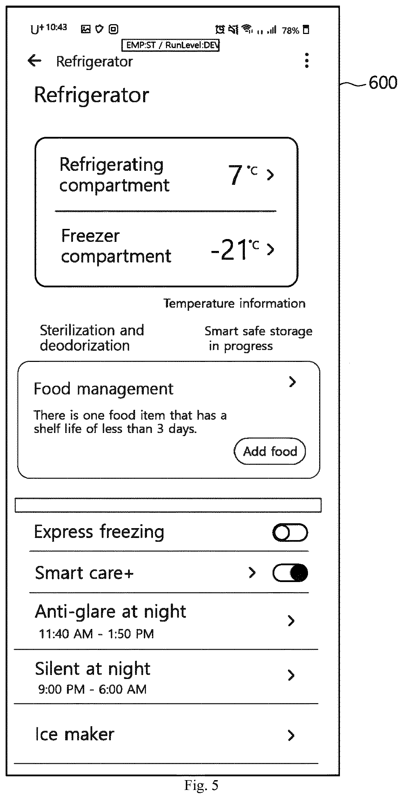

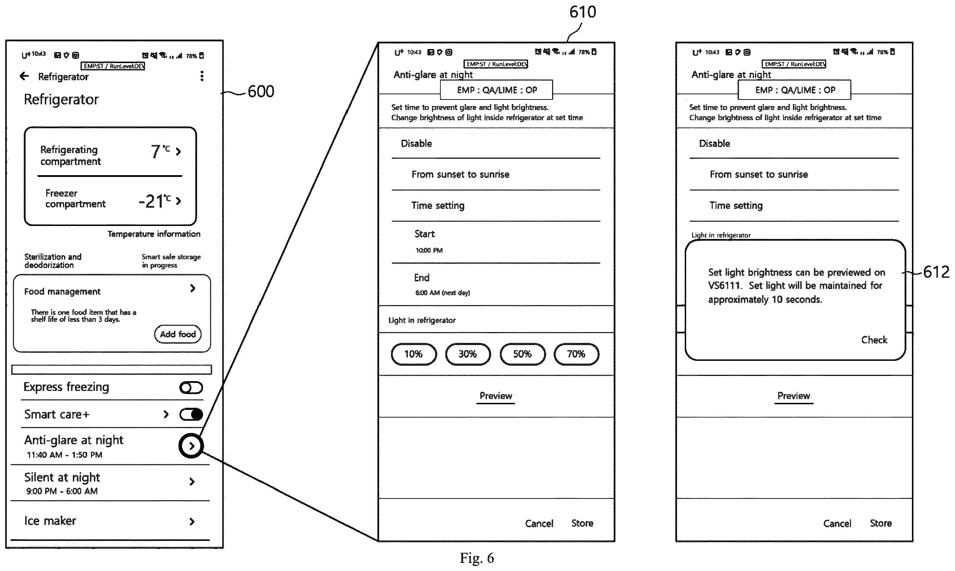

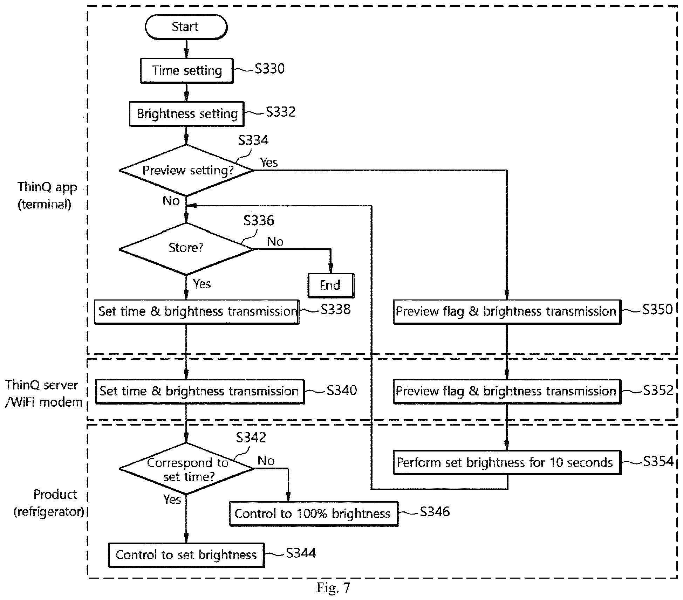

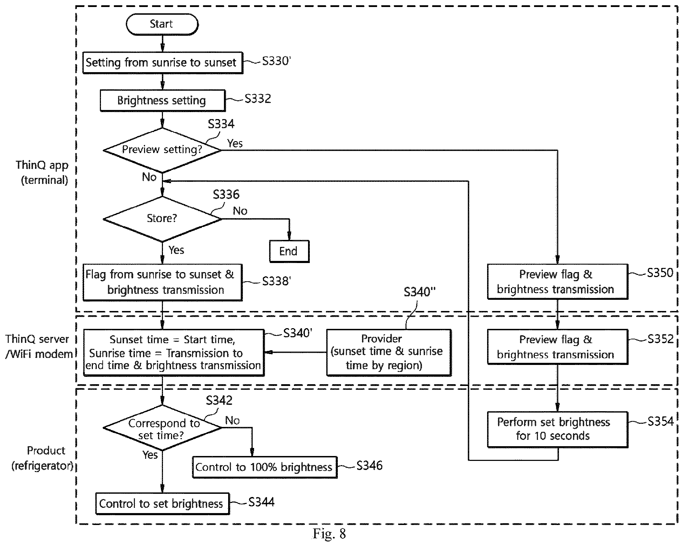

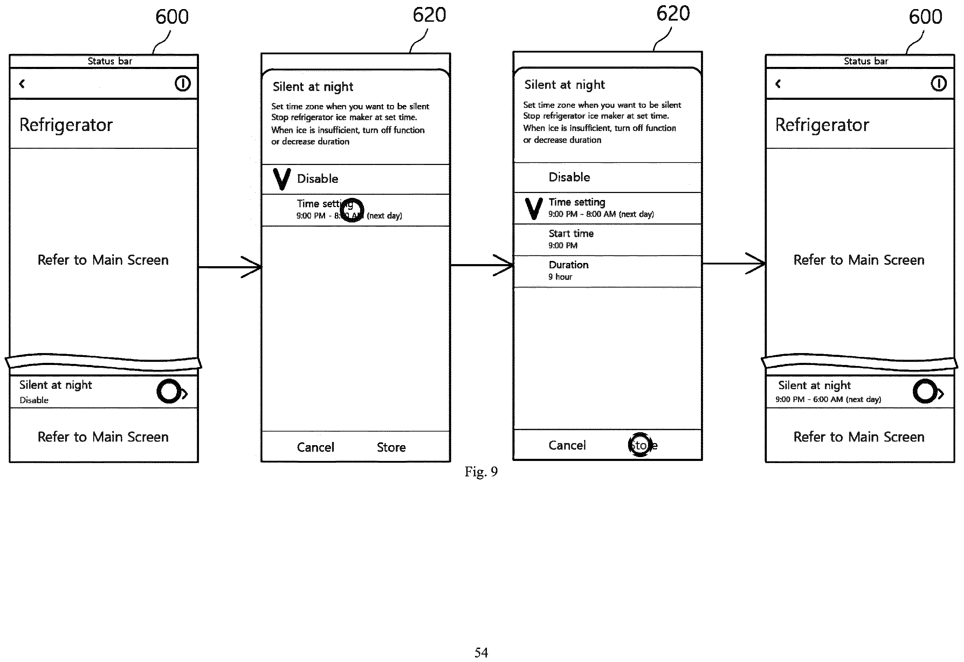

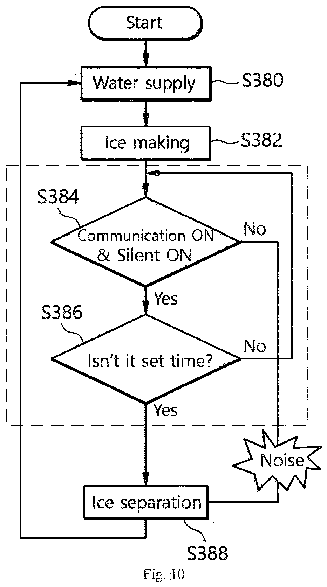

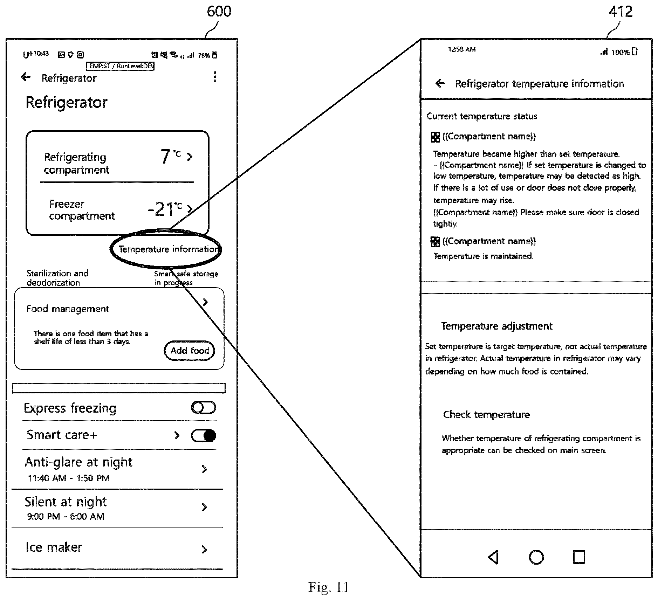

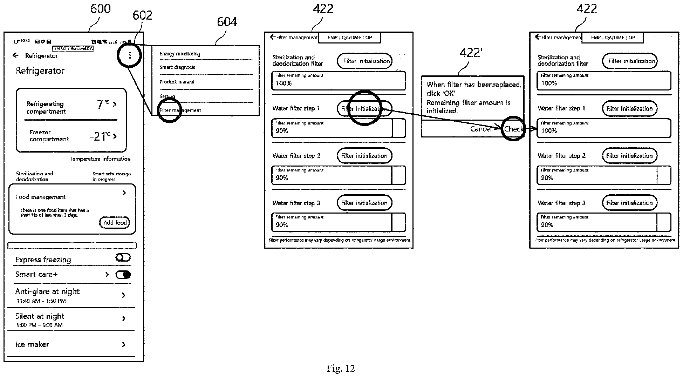

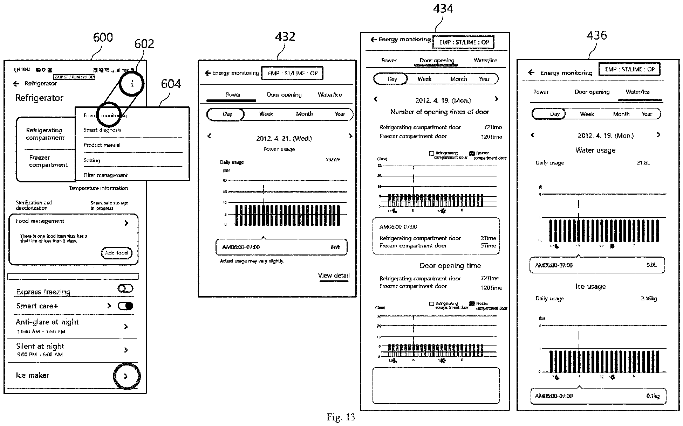

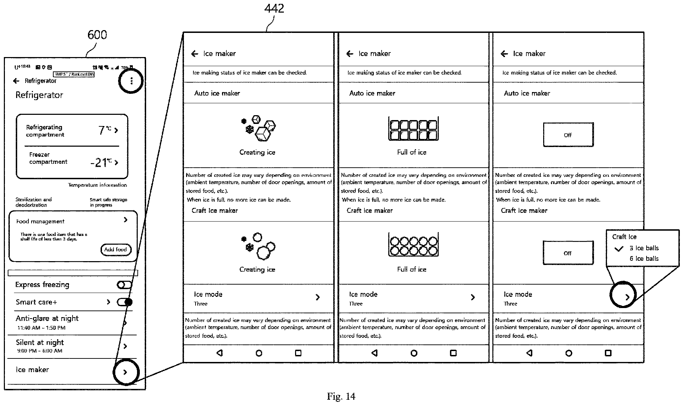

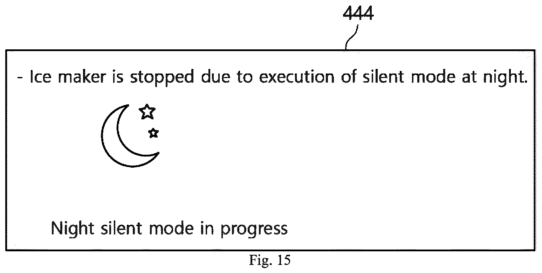

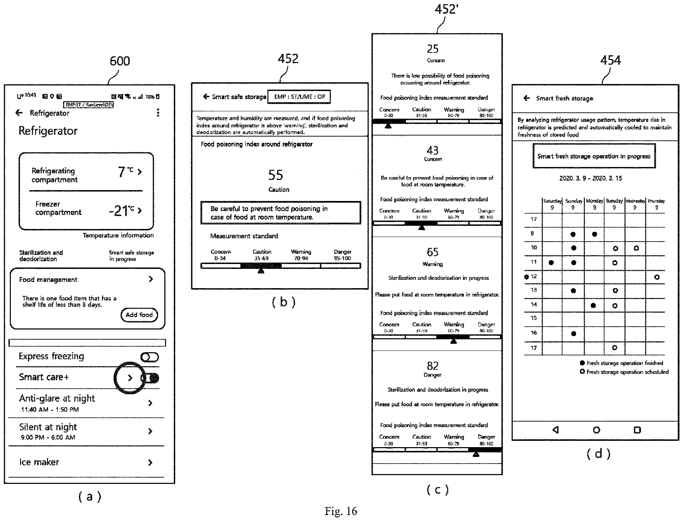

FIGS. 5 to 16 show configuration diagrams of screens illustrating the functions of the smart refrigerator according to the present disclosure. That is, FIG. 5 is a configuration diagram of a home screen to explain the functions of the smart refrigerator according to the present disclosure, and FIG. 6 is a configuration diagram of a screen illustrating an embodiment of setting a night anti-glare function of the smart refrigerator according to the present disclosure. FIGS. 7 and 8 respectively illustrate flowcharts for the time setting and sunrise/sunset time setting of the night anti-glare function of the smart refrigerator according to the present disclosure. In addition, FIGS. 9 and 10 respectively illustrate a configuration diagram of a screen setting the night silent function and a flowchart illustrating the execution process of the night silent function in the smart refrigerator according to the present disclosure, FIGS. 11 and 12 respectively illustrate configuration diagrams of screens illustrating the execution state of temperature information and an example of use of a filter management menu of the smart refrigerator according to the present disclosure, and FIG. 13 illustrates a configuration diagram of a screen illustrating an example of the energy monitoring of the smart refrigerator according to the present disclosure. In addition, FIGS. 14 and 15 respectively illustrate configuration diagrams of screens illustrating an example of a menu configuration of the ice maker of the smart refrigerator according to the present disclosure and an example of the execution state of the night silent mode in the menu configuration, and FIG. 16 is a configuration diagram of a screen illustrating an example of a state display of a smart care of the smart refrigerator according to the present disclosure.

First, as illustrated in FIG. 5, the home screen 600 of the smart refrigerator according to the present disclosure may be configured to allow a user to select various menus or set customized functions, and may display the temperatures of the refrigerating compartment and the freezer compartment in real time. In addition, the home screen 600 of the refrigerator may be provided on the front surface of the door of the refrigerator 100, or on a user's the mobile terminal 130. Of course, the home screen may be displayed on the front surface of the refrigerator 100 and the terminal 130 at the same time.

FIG. 6 illustrates a setting for the night anti-glare mode 310. As illustrated in the drawing, when a 'night anti-glare' menu in the home screen 600 of the refrigerator is touched or clicked, an operation screen 610 is displayed as illustrated in FIG. 6, and a 'night anti-glare' function may be set. For example, the 'night anti-glare' function may be set by selecting 'Disable', 'From sunset to sunrise' or 'time setting'.

In this way, night time set in the night anti-glare mode 310 may be 'time from sunset to sunrise'. In this case, the 'time from sunset to sunrise' may be calculated from sunset time and sunrise time for each date preset on a user's mobile device (a mobile terminal, etc.) or mobile app.

In addition, the 'time from sunset to sunrise' may be supplied from a sunset time and sunrise time provider through a user's terminal (mobile) or mobile app. That is, sunset time and sunrise time for a corresponding day provided in real time from a sunset time and sunrise time provider such as Korea Meteorological Administration may be used.

The sunset time and sunrise time data supplied from the provider may be based on the installation location of the refrigerator preset in a user's app. That is, when registering the app, a user may receive the location information, and a time zone may be checked by using this location information to apply the time information to the product (the refrigerator). The night anti-glare function may be set to be performed by matching this time information to the sunset time and sunrise time of a relevant date.

When a user opens the door 10 or 160 of the refrigerator 100, the night anti-glare mode 310 is intended to prevent glare caused by the internal light of the refrigerator. When setting the internal brightness of the refrigerator in the night anti-glare mode 310, a user may perform a preview function to experience the state of the brightness in advance.

The internal brightness of the refrigerator in the night anti-glare mode 310 may be set to be at least one brightness of 10%, 30%, 50%, and 70% of normal brightness during the day. That is, a user may set the internal brightness of the refrigerator by selecting one of 10%, 30%, 50%, and 70% in a `light in the refrigerator' menu on the operation screen 610.

In addition, when a user selects one menu of 10%, 30%, 50%, and 70% for setting the internal brightness of the refrigerator in the night anti-glare mode 310, the temporarily selected brightness may be reflected in the internal light of the refrigerator. That is, at the same time at which a preview screen 612 is displayed, corresponding brightness may be previewed for about 10 seconds.

In FIG. 7, an example of a flowchart time setting in the night anti-glare mode 310 and the internal brightness setting of the refrigerator is illustrated in a flowchart.

As illustrated in the drawings, when 'time setting' is selected in the operation screen 610 of FIG. 6, a time setting step S330 is performed to set time at which the anti-glare function is activated. The time setting step S330 is a step at which a user can arbitrarily specify the desired activation time of the anti-glare function.

After the time setting step S330, a brightness setting step S332 which sets brightness inside the refrigerator may be performed.

At the brightness setting step S332, as described above, when the normal brightness (during the day) of the internal brightness of the refrigerator is considered to be 100%, how much brightness to maintain is set to prevent glare, and any one of 10%, 30%, 50%, 70% may be set.

The brightness setting step S332 is followed by a preview judgment step S334 that determines whether 'preview', which enables the experience of set brightness in advance, has been selected. That is, since a user can choose whether to preview, a process of determining whether the preview has been selected may be performed.

When 'preview' is not selected as a result of judgment at the preview judgment step S334, a storage judgment step S336 for determining whether to save the set brightness may be performed.

When 'storage' is selected as a result of judgment at the storage judgment step S336, a server transmission step S338 at which time set at the time setting step S330 and brightness set at the brightness setting step are transmitted to the server 120 may be performed. That is, each of the above steps may be mainly performed in a mobile app such as a user's terminal 130, and selections made in the terminal 130 may be transmitted to the server 120 and stored.

In addition, when the 'storage' is not selected as a result of the judgment at the storage judgment step S336, the setting of the anti-glare function may stop.

In the server 120, a product transmission step S340 is performed to transmit information received through the server transmission step S338 back to the refrigerator 100.

When the information is transmitted to the refrigerator 100, which is a product in use, through the product transmission step S340, a time judgment step S342 is performed in the refrigerator 100 to determine whether current time corresponds to time at which the anti-glare function set at the time setting step S330 is activated.

When current time corresponds to set time as a result of judgment at the time judgment step S342, a brightness control step S344 is performed to control the internal light of the refrigerator to set brightness.

When the current time does not correspond to set time as a result of the judgment at the time judgment step S342, a basic control step S346 is performed to control the internal light of the refrigerator to preset illuminance, that is, brightness of 100%.

Meanwhile, when 'preview' is selected as a result of the judgment at the preview judgment step S334, a preview server transmission step S350 is performed to transmit the 'preview flag and brightness' to the server 120. That is, when 'preview' is selected through a mobile app of a user such as the terminal 130, brightness set by a user, along with a signal indicating that this information is for 'preview', is transmitted to the server 120.

In the server 120, a preview product transmission step S352 is performed to transmit the received information to an actual operating product, such as the refrigerator 100.

When the preview brightness information is transmitted to the refrigerator 100 through the preview product transmission step S352, a preview performance step S354 is performed in the refrigerator 100 to display light of corresponding brightness for about 10 seconds according to the brightness information set by a user. Of course, this preview time may be changed to 5 seconds, etc.

In FIG. 8, an example of 'setting from sunset to sunrise' in the night anti-glare mode 310 and setting the interior brightness of the refrigerator is illustrated in a flowchart. That is, a flowchart for selecting 'from sunset to sunrise' is illustrated in the operation screen 610 of FIG. 6, and this is similar to the case of selecting 'time setting' illustrated in FIG. 7, only different contents will be explained herein.

First, here, instead of the time setting step S330, an automatic setting step S330' is performed to automatically set time at which the anti-glare function is activated. The automatic setting step S330' allows a user to set the activation time of the anti-glare function desired by the user from sunset to sunrise, so that the illuminance of the internal light of the refrigerator is automatically changed in response to the sunset and sunrise times that change by date. It is a process of selection.

Next, here, an automatic server transmission step S338' is performed instead of the server transmission step S338. That is, when the 'storage' is selected as a result of the judgment at the storage judgment step S336, the automatic server transmission step S338' is performed to transmit the 'flag from sunset to sunrise and brightness' to the server 120. When the activation time of the anti-glare function is specified from sunset to sunrise through a mobile app of a user such as the terminal 130, the automatic server transmission step S338' is a step of transmitting a signal indicating that the information is the anti-glare setting time 'from sunset to sunrise' and brightness set by a user to the server 120.

In the server 120, an automatic product transmission step S340' is performed to secure data according to information received through the automatic server transmission step S338' and transmit the data back to the refrigerator 100. In the automatic product transmission step S340, the information that the start time of the anti-glare function is sunset time and the end time thereof is sunrise time (of the next day) may be stored, and data on sunset time and sunrise time by date may be supplied from an external agency. That is, an information provision step (S340"), which provides sunset time and sunrise time information for each date of a corresponding region to the server 120, is further performed and may be linked to the automatic product transmission step S340'.

For example, it is possible to receive and use information from the site of 'Accuweather' (https://www.accuweather.com), which provides regional sunset and sunrise times by date. Of course, in this case, when installing an app (application) for setting the anti-glare function as described above on the terminal 130, it is preferable that regional information is entered in advance and the sunset time and sunrise time for each date of a corresponding region provided by external organizations or Internet sites is automatically updated by the regional information. Of course, the sunset time and sunrise time for each date may be stored in advance in a user's terminal 130, and the automatic product transmission step S340 may be performed by using the sunset time and sunrise time.

Other steps are the same as those described above. That is, steps here are different from the above-described steps at which a user arbitrarily sets the activation time of the anti-glare function to use 'sunset time and sunrise time', so the steps described with reference to FIG. 7 may be used for steps other than the steps described here.

Meanwhile, FIF. 9 illustrates an example of the setting of the night silent mode 320, and as illustrated in the drawing, when a 'night silent' menu is selected (touched) on the home screen 600 of the refrigerator, a setting screen 620 for the night silent mode 320 may be displayed, and in this setting screen 620, 'disable' or 'time setting' may be selected. In addition, when the time setting is completed, set time of 'night silent' is displayed on the home screen 600.

In this way, the night time set for the night silent mode 320 can be set by a user setting. In addition, the set silent time of the night silent mode 320 may be set not to exceed a total of 9 hours. This is based on the results of a typical user's statistical analysis that it is difficult to respond to demand for ice if ice separation is not performed for 9 hours or more.

Specifically, the night silent mode 320 includes a function of preventing generation of noise by preventing 'ice separation' for separating ice from the ice maker and storing the ice after ice is made in the ice maker. When the setting time of the night silent mode 320 exceeds 9 hours, it is impossible to respond to a user's demand for ice, so the set silent time of the night silent mode 320 may be prevented from exceeding 9 hours.

FIG. 10 is a flowchart illustrating an example of the process of performing the night silent function of the smart refrigerator according to the present disclosure. That is, this is a flowchart showing a process in which an ice separation operation is restricted according to the night silent mode 320 described above.

As illustrated in the drawing, when a water supply step S380, at which water is supplied to the ice maker of the refrigerator 100, is performed first, an ice making step S382 at which ice is made in the ice maker is performed. In addition, after the ice making step S382 is performed, a silence judgment step S384 is performed to determine whether communication is on and whether the night silent mode 320 is set.

This is a process of determining whether a user's mobile device, such as the terminal 130, is connected to the refrigerator via Wi-Fi or wireless communication, and whether a user has set the night silent mode 320. Whether communication is on and whether the night silent mode 320 is set may be determined simultaneously and sequentially/individually.

Of course, here, whether or not the night silent mode 320 is set is an important point, and even if communication is not turned on, the silence judgment step S384 may be performed on the basis of only whether the night silent mode 320 is set. That is, even if communication is not turned on, ice separation may be restricted when the night silent mode 320 is set.

When the night silent mode 320 is set as a result of judgment at the silence judgment step S384, a set time judgment step S386 may be performed to determine whether current time corresponds to the set time of the night silent mode 320.

When the current time does not correspond to the set time of the night silent mode 320 as a result of the judgment at the set time judgment step S386, an ice separation step S388 at which ice is separated is performed.

Meanwhile, when the night silent mode 320 is not set as a result of the judgment at the silence judgment step S384, the ice separation step S388 may be performed immediately.

In addition, when the current time corresponds to the set time of the night silent mode 320 as a result of the judgment at the set time judgment step S386, the ice separation step S388 is not performed, and the process returns to the silence judgment step S384.

The temperature display 410 of the refrigerator may display a current temperature compared to a target temperature inside the refrigerator as the running state thereof is illustrated in FIG. 11. As illustrated in the drawing, the temperature display may display temperature information for each compartment within the refrigerating compartment or the freezer compartment. That is, as illustrated in FIG. 11, when 'temperature information' is touched (selected) on the home screen 600, the temperature information screen 412 may be displayed as shown and may display temperature information for each compartment.

In addition, in the temperature display 410, three or more of 'very high', 'high', 'adequate', and 'low' may be used. That is, a current temperature compared to a target temperature may be displayed numerically, but the comparison result may be displayed as 'very high', 'high', 'adequate', and' low'.

Specifically, the temperature display of the refrigerating compartment may be divided into four levels of 'very high', 'high', 'adequate', and 'low', and the temperature display of the freezer compartment may be divided into three levels of 'very high', 'high', and 'adequate'.

In addition, the temperature display 410 may display 'temperature stabilizing' when a target temperature has not been reached for up to 72 hours after power is turned on.

FIG. 12 illustrates an example of the filter display 420. That is, an example of the use of the filter management menu of the smart refrigerator according to the present disclosure is illustrated.

As illustrated in the drawing, when an other-selection part 602 is selected on the home screen 600, a menu selection box 604 including 'the energy monitoring', 'smart diagnosis', 'product manual', 'setting', and 'filter management' is displayed, and when 'filter management' is selected (touched) on the menu selection box 604, a filter management screen 422 may be seen.

In the filter management screen 422, management states and usage states of various filters such as a sterilization filter (a sterilization and deodorization filter) and a water purification filter may be displayed, and the amount of use or remaining amount of the filters may be displayed in percentage (%).

Accordingly, the filter display 420 may include the display of the remaining amount of the sterilization filter (the sterilization and deodorization filter) and the display of the remaining amount of the water purification filter.

Displaying of the remaining amount of the sterilization filter may be set to display a period of remaining usable time of the sterilization filter in a percentage (%), and displaying of the remaining amount of the water purification filter may be set to display a lower value, in a percentage (%), of a period of remaining usable time of the water purification filter and a remaining water discharge amount.

In addition, in a case in which a filter is replaced, when 'filter initialization' is pressed on the filter management screen 422, an initialization information screen 422' appears, and when 'OK' is pressed on the initialization information screen, in the filter management screen 422, the remaining amount of the filter is initialized to 100% as shown.

The energy display 430 may include power usage, door opening information, or water/ice usage display, and FIG. 13 illustrates a configuration diagram of a screen illustrating an example of the energy monitoring.

As illustrated in the drawing, when the other-selection part 602 is touched (selected) on the home screen 600, the menu selection box 604 including 'the energy monitoring', 'smart diagnosis', 'product manual', 'setting', and 'filter management' is displayed, and when 'the energy monitoring' is selected (touched) in the menu selection box 604, an energy monitoring screen may be seen.

As illustrated in the drawing, the energy monitoring screen may be displayed by being divided into a power quantity monitoring screen 432, a door opening monitoring screen 434, and a water/ice monitoring screen 436.

The door opening information may be configured to display the number of door openings or a period of door opening time by day, week, month, or year, and the water/ice usage display may be configured to display water usage or ice usage by day, week, month, or year.

The ice condition display 440 may display at least one of 'off', 'creating ice', 'full of ice', and 'running the night silent mode'.

FIG. 14 is a configuration diagram of a screen illustrating an example of a menu configuration of an ice maker of the smart refrigerator according to the present disclosure. When an 'ice maker' menu is selected on the home screen 600, an ice making screen 442 such as 'off', 'creating ice', or 'full of ice' may appear with an image. In addition, the screen of 'the ice maker' may be provided with 'craft ice maker' that makes ice in a sphere shape in addition to 'auto ice maker' that makes ice in a general shape (such as a cube) .

In addition, as illustrated in FIG. 15, during the performance of the night silent mode 320 in which ice separation is not performed, a night silent mode screen 444 is displayed. In this case, an image indicating the state of the night silent mode 320 may be displayed, and a phrase of "running a night silent mode" may also be displayed.

The storage state display 450 may display 'attention', 'caution', 'warning', and 'danger' stages divided from each other, and may include displaying whether 'smart fresh storage operation is in progress' and 'fresh storage operation finished' or a schedule of 'fresh storage operation scheduled' by date.

FIG. 16 is a screen diagram illustrating an example of a state display of the smart care of the smart refrigerator according to the present disclosure.

As illustrated in the drawing, in the home screen 600 of FIG. 16(a), when a 'smart care' menu is selected, 'smart safe storage' or 'smart fresh storage' may be set. FIG. 16(b) illustrates an example of a safe storage screen 452. In this case, 'food poisoning index around refrigerator' may appear in color and numerical value, and a warning phrase such as `Be careful to prevent food poisoning in the case of food at room temperature' may also be displayed.

In the safe storage screen 452, at least one of the 'Concern', 'Caution', 'Warning', and 'Danger' stages may be displayed by being divided by color. Each of these step-by-step screens 452' are illustrated in FIG. 16(c).

In addition, a fresh storage screen 454 of FIG. 16(d) may be displayed. In this case, whether 'smart fresh storage operation is in progress' and 'fresh storage operation finished' or a schedule of 'fresh storage operation scheduled' may be displayed by date, and 'smart fresh storage operation scheduled time' may be displayed or various storage states and plans such as 'there is no smart fresh storage operation schedule today' may be displayed.

In addition, the temperature display 410 may display a temperature state before defrosting until a target temperature range is reached or four hours have elapsed after the defrosting when the defrost mode of the refrigerator is performed. Here, a reason for which the elapsed time after defrosting is 4 hours is based on experimental results.

The inducing function 500 includes guiding filter replacement through a push notification when a filter reaches its replacement cycle or when a remaining filter usage time/remaining amount reaches a predetermined level. Accordingly, filter replacement notification is provided to a user at time set by the user or at time preset at product launch, so a user can receive the push notification and prepare for filter replacement.

In this way, it is preferable to guide a filter replacement cycle by considering filter usage time and filter usage amount for a remaining filter amount. Even if a filter usability period (for example, 6 months) has not elapsed, a push notification for replacement of the water purification filter may be provided when water usage is high.

A push notification as the inducing function 500 may guide door opening checking or food location changing when a temperature inside the refrigerator is outside a normal range. That is, when a temperature inside the refrigerator is outside a normal range for a predetermined period of time or does not reach a target temperature for a predetermined period of time, an abnormal condition has occurred in the refrigerator, and thus a push notification may be provided to a user to induce the user to check door opening. For example, a user's action may be induced through a notification such as 'please check if a door is closed.'

In addition, even when food or containers block a cold air outlet or a cold air passage inside the refrigerator, a temperature inside the refrigerator may be outside a normal range, so a user's action may be induced through a notification informing the user to change the location of food, etc. For example, messages such as 'please organize the upper part of the refrigerating compartment' may be used to induce a user to change the location of food inside the refrigerator or check the cold air passage.

In addition, the provision of the push notification may be performed even when water or ice has not been used for 7 days. That is, as a result of the experiment, when water or ice is left for about 7 days, the risk of bacterial growth increases, and after about 7 days has elapsed while ice repeats the process of melting and refreezing after the ice is made, the ice is firmly attached to the ice maker device, thereby making ice separation difficult.

Accordingly, when water or ice has not been used for 7 days, it is necessary to provide a push notification to allow a user to take out or remove the water or ice. For example, a user may be induced to take an action by providing a push notification such as 'Drain water' or 'empty an ice box.'

The scope of the present disclosure is not limited to the embodiments illustrated above, and within the above technical scope, many other modifications based on the present disclosure will be possible for those skilled in the art.

## Claims

1. A smart refrigerator comprising:
a night function of allowing a user to set a mode required at night;
an app display function of displaying state information of the refrigerator on a display window of the refrigerator or on a mobile app (application) of a user through wired/wireless communication; and
an inducing function of inducing a user to take a specific action when a state of the refrigerator is out of a normal state through real-time monitoring of the state of the refrigerator.

2. The smart refrigerator of claim 1, wherein the night function comprises a night anti-glare mode of preventing a user's glare by allowing the user to adjust internal brightness of the refrigerator to be darker at set night time than during the day, and a night silent mode of preventing an ice separation function of an ice maker from operating at set silent time.

3. The smart refrigerator of claim 2, wherein the set night time in the night anti-glare mode is time from sunset to sunrise.

4. The smart refrigerator of claim 3, wherein the time from sunset to sunrise is calculated from sunset time and sunrise time for each day preset in a mobile or mobile app of a user.

5. The smart refrigerator of claim 3, wherein the time from sunset to sunrise is supplied from a sunset time and sunrise time provider through a mobile or mobile app of a user, and data about the sunset and sunrise time supplied from the provider are based on an installation location of the refrigerator preset in the app of the user.

6. The smart refrigerator of claim 2, wherein when setting the internal brightness of the refrigerator in the night anti-glare mode, a user performs a preview function to experience a state of the brightness in advance.

7. The smart refrigerator of claim 2, wherein the set night time in the night silent mode is set by a user.

8. The smart refrigerator of claim 7, wherein the set silent time in the night silent mode is set not to exceed a total of 9 hours.

9. The smart refrigerator of claim 1, wherein the app display function comprises:
a temperature display configured to display a temperature state inside the refrigerator;
a filter display configured to display a remaining amount or remaining period of time of a filter used in the refrigerator; and
an energy display configured to display an energy consumption state comprising an amount of electricity used in the refrigerator.

10. The smart refrigerator of claim 9, wherein the app display function further comprises:
an ice condition display configured to display a state of an ice maker; and
a storage state display configured to display a state of food in the refrigerator.

11. The smart refrigerator of claim 9, wherein the temperature display displays a state of a current temperature compared to a target temperature in the refrigerator.

12. The smart refrigerator of claim 11, wherein in the temperature display, three or more of 'very high', 'high', 'adequate', and 'low' are used.

13. The smart refrigerator of claim 9, wherein the temperature display displays 'temperature stabilizing' when a target temperature has not been reached for up to 72 hours after power is turned on.

14. The smart refrigerator of claim 9, wherein the energy display comprises displaying power usage, door opening formation, or water/ice usage.

15. The smart refrigerator of claim 10, wherein the ice condition display displays at least one of 'off', 'creating ice', 'full of ice', and 'running a night silent mode'.

16. The smart refrigerator of claim 10, wherein the storage state display is divided into levels of 'attention', 'caution', 'warning', and 'danger'.

17. The smart refrigerator of claim 10, wherein the storage state display comprises displaying whether 'smart fresh storage operation is in progress' and 'fresh storage operation finished' or a schedule of 'fresh storage operation scheduled' by date.

18. The smart refrigerator of claim 9, wherein the temperature display displays a temperature state before defrosting until a target temperature range is reached or four hours have elapsed after the defrosting when a defrost mode is performed.

19. The smart refrigerator of claim 1, wherein the inducing function guides door opening checking or food location changing through a push notification when a temperature inside the refrigerator is outside a normal range.

20. The smart refrigerator of claim 1, wherein the inducing function provides a push notification when water or ice is not used for a predetermined period or more.
